# EUROPEAN PATENT SPECIFICATION

(11) **EP 3 444 925 B1**
(45) Date of publication and mention of the grant of the patent: **27.04.2022**
(21) Application number: 17775864.6
(22) Date of filing: 30.03.2017
(51) Int. Cl.: H02J 7/00, H04L 5/00, G01S 7/41, H02J 50/20, H02J 50/90, H02J 50/80, G06Q 20/32, G07F 15/00, H04B 5/00, H04B 7/06, H04W 4/02, H04W 4/24, H04W 36/08, H04W 52/28, H04W 52/42, H04B 17/10, H02J 13/00, H02J 50/40

(54) **WIRELESS POWER TRANSMISSION APPARATUS AND CONTROL METHOD THEREFOR**
VORRICHTUNG ZUR DRAHTLOSEN STROMÜBERTRAGUNG UND STEUERUNGSVERFAHREN DAFÜR
APPAREIL DE TRANSMISSION D'ÉNERGIE SANS FIL ET SON PROCÉDÉ DE COMMANDE

(30) Priority: 31.03.2016 US 201662315869 P; 02.08.2016 KR 20160098432
(43) Date of publication of application: 20.02.2019
(73) Proprietor: Samsung Electronics Co., Ltd., Suwon-si, Gyeonggi-do 16677 (KR)
(72) Inventor: LEE, Kyung-Woo, Suwon-si Gyeonggi-do 16677 (KR); SHIN, Jae-Hyuck, Suwon-si Gyeonggi-do 16677 (KR); LEE, Sang-Wook, Suwon-si Gyeonggi-do 16677 (KR); LEE, Chong-Min, Suwon-si Gyeonggi-do 16677 (KR); HAN, Hyo-Seok, Suwon-si Gyeonggi-do 16677 (KR)
(74) Representative: Nederlandsch Octrooibureau
(86) International application number: PCT/KR2017/003503
(87) International publication number: WO 2017/171440

(56) References cited:
- EP-A1- 2 822 146
- EP-A2- 2 876 771
- WO-A1-2014/075103
- WO-A1-2015/022690
- KR-A- 20080 098 035
- KR-A- 20130 128 041
- KR-A- 20140 123 222
- US-A1- 2014 175 893

## Description

### [Technical Field]

The present disclosure relates to a wireless power transmission apparatus and a method for controlling the same, and more specifically, to a wireless power transmission apparatus capable of wirelessly transmitting power to an electronic device and a method for controlling the wireless power transmission apparatus.

### [Background Art]

Portable digital communication devices have become must-have items for modern people. Customers desire to receive various high-quality services fast anytime, anywhere. Recent development of Internet of Things (IoT) technology bundles various sensors, home appliances, and communication devices up into a single network. A diversity of sensors require a wireless power transmission system for seamless operations.

Wireless power transmission may come in various types, such as magnetic induction, magnetic resonance, and electromagnetic waves, thereby remotely transmitting power.

Such electromagnetic wave type may transmit power remotely. Thus, it matters to remotely determine the location of a receiver with high accuracy and efficiently deliver power to the receiver.

EP 2 822 146 A1 relates to performing power supply to a power receiving device by selecting a power transmission device appropriately. A power receiving device transmits request-power to a plurality of power transmission devices, the request-power being power the power receiving device requests to be supplied with, the power transmission device, when receiving the request-power from the power receiving device, generates determination reference information based on the received request-power.

EP 2 876 771 A2 relates to a wireless power transmission apparatus in which at least one transmission antenna is transmitting a high-frequency power to at least a first wireless power reception apparatus and in which it is detected that at least a second wireless power reception apparatus is newly electromagnetically coupled with at least one transmission antenna. The wireless power transmission apparatus changes one of a frequency and an amplitude of the high frequency power depending on a voltage value received from each of at least the first and second wireless power reception apparatuses.

US 2014/175893 A1 discloses a wireless power transmission apparatus comprising a plurality of wireless power transmitters to power a device positioned away from the apparatus via electromagnetic waves.

The above information is presented as background information only to assist with an understanding of the present disclosure. No determination has been made, and no assertion is made, as to whether any of the above might be applicable as prior art with regard to the present disclosure.

### [Detailed Description of the Invention]

### [Technical Problem]

In order to determine the position of a target for charging, e.g., an electronic device, a convention electromagnetic wave scheme forms radio frequency (RF) waves in multiple directions, receives information about power reception from the electronic device, and uses the received information to make such determination. However, the formation of RF waves in multiple directions and the reception of power-related information take long and consume much power. In particular, high-power transmission before sensing a target for charging is not likely to be done due to harm to humans.

### [Technical Solution]

This summary is provided to introduce a selection of concepts in a simplified form that are further described in the detailed description. This summary is not intended to identify key features or essential functions of the claimed subject matter, nor is it intended for determining the scope of the claimed subject matter. Aspects of the invention are disclosed in independent claims 1 and 8.

According to various embodiments of the present disclosure, there are provided a wireless power transmission apparatus that first determines the direction of wireless power transmission using communication signals from an electronic device and determines the precise location of the electronic device using the determined direction and a method for controlling the wireless power transmission apparatus.

According to various embodiments, there is provided a wireless power transmission apparatus according to claim 1.

According to various embodiments, there is provided a method for controlling a wireless power transmission apparatus according to claim 8

Other aspects, advantages, and salient features of the disclosure will become apparent to those skilled in the art from the following detailed description, which, taken in conjunction with the annexed drawings, discloses exemplary embodiments of the disclosure.

### [Brief Description of Drawings]

Fig.1 is a concept view illustrating a wireless power transmission system according to various embodiments of the present disclosure.
FIG. 2 is a flowchart illustrating a method for controlling a wireless power transmission apparatus according to various embodiments of the present disclosure.
FIG. 3 is a block diagram illustrating a wireless power transmission apparatus according to various embodiments of the present disclosure.
FIG. 4 is a concept view illustrating a difference in time of reception of communication signals according to various embodiments of the present disclosure.
FIG. 5 is a flowchart illustrating a method for controlling a wireless power transmission apparatus according to various embodiments of the present disclosure.
FIG. 6 is a flowchart illustrating a method for controlling a wireless power transmission apparatus according to various embodiments of the present disclosure.
FIG. 7 is a concept view illustrating a configuration for determining a distance between a wireless power transmission apparatus and an electronic device according to various embodiments of the present disclosure.
FIG. 8 is a flowchart illustrating a method for controlling a wireless power transmission apparatus according to various embodiments of the present disclosure.
FIG. 9 is a concept view illustrating a binary detection method according to various embodiments of the present disclosure.
FIGs. 10a and 10b are block diagrams illustrating a wireless power transmission apparatus according to various embodiments of the present disclosure.
FIGs. 11a and 11b are concept views illustrating wireless charging for a plurality of electronic devices.
FIGs. 12a and 12b are flowcharts illustrating a method for controlling a plurality of electronic devices according to various embodiments of the present disclosure.
FIGs. 13 to 15 are flowcharts illustrating a method for controlling a wireless power transmission apparatus according to various embodiments of the present disclosure.
FIG. 16 is a flowchart illustrating operations of a wireless power transmission apparatus and an electronic device according to various embodiments of the present disclosure.

Throughout the drawings and the detailed description, like reference numerals will refer to like components. The drawings are not to scale, and relative sizes, proportions, and illustration of components of the drawings could be exaggerated for clarity, description, and convenience.

### [Mode for Carrying out the Invention]

Hereinafter, various embodiments of the present disclosure will be disclosed with reference to the accompanying drawings. However, embodiments and terms used therein are not intended to limit the present disclosure to particular embodiments, and it should be construed as including various modifications, equivalents, and/or alternatives according to the embodiments of the present disclosure. With regard to the description of the drawings, similar reference numerals may be used to refer to similar or related elements. It is to be understood that a singular form of a noun corresponding to an item may include one or more of the things, unless the relevant context clearly indicates otherwise. In the present disclosure, an expression such as "A or B," "at least one of A or/and B," or "one or more of A or/and B" may include all possible combinations of together listed items. Expressions such as "first," "second," "primarily," or "secondary," used herein may represent various elements regardless of order and/or importance and do not limit corresponding elements. When it is described that an element (such as a first element) is "operatively or communicatively coupled with/to" or "connected" to another element (such as a second element), the element can be directly connected to the other element or can be connected to the other element through another element (e.g., a third element).

An expression "configured to (or set)" used in the present disclosure may be replaced with, for example, in terms of hardware, software, or a combination thereof, "suitable for," "having the capacity to," "adapted to," "made to," "capable of," or "designed to" according to a situation. Alternatively, in some situation, an expression "apparatus configured to" may mean that the apparatus "can" operate together with another apparatus or component. For example, a phrase "a processor configured (or set) to perform A, B, and C" may be a dedicated processor (e.g., an embedded processor) for performing a corresponding operation or a generic-purpose processor (such as a central processing unit (CPU) or an application processor) that can perform a corresponding operation by executing at least one software program stored at a memory device.

Examples of the wireless power transmission apparatus or electronic device according to various embodiments of the present disclosure may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a MP3 player, a medical device, a camera, or a wearable device, without being limited thereto. The wearable device may include at least one of an accessory-type device (e.g., a watch, a ring, a bracelet, an anklet, a necklace, glasses, contact lenses, or a head-mounted device (HMD)), a fabric- or clothes-integrated device (e.g., electronic clothes), a body attaching-type device (e.g., a skin pad), or a body implantable device, without being limited thereto. In some embodiments, examples of the wireless power transmission apparatus or electronic device may include at least one of a television, a digital video disk (DVD) player, an audio player, a refrigerator, an air conditioner, a cleaner, an oven, a microwave oven, a washer, a drier, an air cleaner, a set-top box, a home automation control panel, a security control panel, a media box, a gaming console, an electronic dictionary, an electronic key, a camcorder, or an electronic picture frame, without being limited thereto.

In other embodiments, the wireless power transmission apparatus or the electronic device may include at least one of various medical equipment (for example, magnetic resonance angiography (MRA), magnetic resonance imaging (MRI), computed tomography (CT), an imaging device, or an ultrasonic device), a navigation system, a global positioning system (GPS) receiver, an event data recorder (EDR), a flight data recorder (FDR), a vehicle infotainment device, electronic equipment for ships (e.g., a navigation system and gyro compass for ships), avionics, a security device, a vehicle head unit, an industrial or home robot, a drone, an automatic teller's machine (ATM), a Point of Sales (POS), Internet of things (e.g., electric bulbs, various sensors, electricity or gas meters, sprinkler devices, fire alarm devices, thermostats, streetlights, toasters, exercise machines, hot-water tanks, heaters, boilers, and so forth), without being limited thereto. According to some embodiments, the wireless power transmission apparatus or electronic device may include a part of a furniture, building/structure or a part of a vehicle, an electronic board, an electronic signature receiving device, a projector, and various measuring instruments (e.g., a water, electricity, gas, electric wave measuring device, etc.), without being limited thereto. According to various embodiments, the wireless power transmission apparatus or electronic device may be flexible or may be a combination of two or more of the above-described various devices. The wireless power transmission apparatus or electronic device according to an embodiment of the disclosure is not limited to the above-listed embodiments. Herein, the term "user" used in various embodiments of the present disclosure may refer to a person who uses the electronic device or a device (e.g., an artificial intelligence (AI) electronic device) using the wireless power transmission apparatus or electronic device.

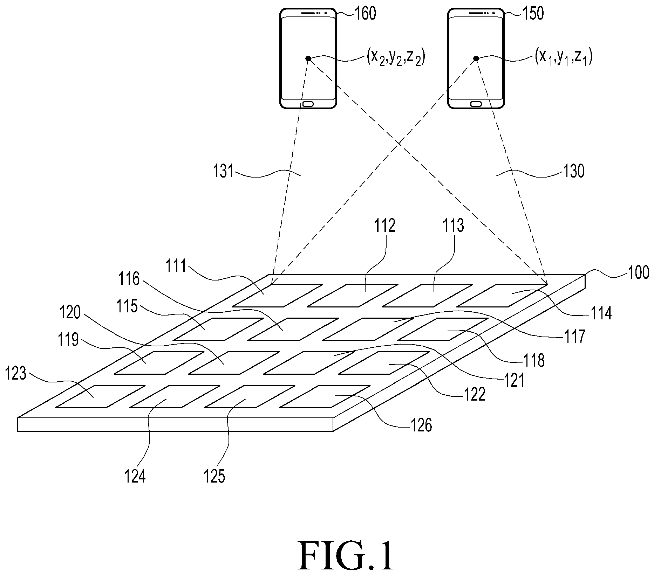

FIG. 1 is a concept view illustrating a wireless power transmission system according to various embodiments of the present disclosure.

The wireless power transmission apparatus 100 may wirelessly transmit power to at least one electronic device 150 or 160. According to various embodiments of the present disclosure, the wireless power transmission apparatus 100 may include a plurality of patch antennas 111 to 126. The patch antennas 111 to 126 are not limited as long as they each are an antenna capable of generating RF waves. At least one of the amplitude and phase of RF waves generated by the patch antennas 111 to 126 may be adjusted by the wireless power transmission apparatus 100. For ease of description, the RF waves respectively generated by the patch antennas 111 to 126 are denoted sub-RF waves.

According to various embodiments of the present disclosure, the wireless power transmission apparatus 100 may adjust at least one of the amplitude and phase of each of the sub-RF waves generated by the patch antennas 111 to 126. Herein, the sub-RF waves may interfere with one another. For example, at a point, the sub-RF waves may constructively interfere with one another so that the strength of the sub-RF wave may increase together with that of another sub-RF wave; at another point, the sub-RF waves may destructively interfere with one another so that two sub-RF waves may destruct each other or the strength of one of them may be reduced by the other. The wireless power transmission apparatus 100 according to various embodiments of the present disclosure may adjust at least one of the amplitude and phase of each of the sub-RF waves generated by the patch antennas 111 to 126 so that the sub-RF waves may constructively interfere with one another at a first point (xl, yl, zl). In one example, the first point (xl, yl, zl) may be a position of the electronic device 150.

For example, the wireless power transmission apparatus 100 may determine that an electronic device 150 is positioned at the first point (xl, yl, zl). Here, the position of the electronic device 150 may be the position where, e.g., a power receiving antenna of the electronic device 150 is located. A configuration in which the wireless power transmission apparatus 100 determines the position of the electronic device 150 is described below in greater detail. In order for the electronic device 150 to wirelessly receive power at a higher transmission efficiency, the sub-RF waves should constructively interfere with one another at the first point (xl, yl, zl). Accordingly, the wireless power transmission apparatus 100 may control the patch antennas 111 to 126 so that the sub-RF waves may constructively interfere with one another at the first point (xl, yl, zl). Here, controlling the patch antennas 111 to 126 may mean controlling the magnitude of signals inputted to the patch antennas 111 to 126 or controlling the phase (or delay) of signals inputted to the patch antennas 111 to 126. Meanwhile, beamforming, a technique for controlling RF waves to be subject to constructive interference at a certain point, would readily be appreciated by one of ordinary skill in the art. It is also appreciated by one of ordinary skill in the art that the beamforming used herein is not particularly limited in type. For example, various beamforming methods may be adopted as disclosed in U.S. Patent Application Publication No. 2016/0099611, U.S. Patent Application Publication No. 2016/0099755, and U.S. Patent Application Publication No. 2016/0100124, by reference. A RF wave formed by beamforming may be denoted a pocket of energy.

Hence, a RF wave 130 formed by the sub-RF waves may have the maximum amplitude at the first point (xl, yl, zl). At the first point (xl, yl, zl), the electronic device 150 may receive wireless power at a higher efficiency. Meanwhile, the wireless power transmission apparatus 100 may detect that an electronic device 160 is positioned at a second point (x2, y2, z2). The wireless power transmission apparatus 100 may control the patch antennas 111 to 126 so that the sub-RF waves may constructively interfere with one another at the second point (x2, y2, z2) in order to charge the electronic device 160. Hence, a RF wave 131 formed by the sub-RF waves may have the maximum amplitude at the second point (x2, y2, z2). At the second point (x2, y2, z2), the electronic device 160 may receive wireless power at a higher efficiency.

In an embodiment, the electronic device 150 may be positioned to the right of the wireless power transmission apparatus 100 when compared to the electronic device 160. In this case, the wireless power transmission apparatus 100 may apply a relatively larger delay to sub-RF waves formed by the patch antennas (e.g., 114, 118, 122, and 126) positioned relatively at a right side or near the electronic device 150. In other words, after a predetermined time from when the sub-RF waves are formed by patch antennas (e.g., 111, 115, 119, and 123) positioned relatively at a left side or far from the electronic device 150, sub-RF waves may be generated by the patch antennas (e.g., 114, 118, 122, and 126) positioned relatively at a right side. Thus, the sub-RF waves may simultaneously meet at a relatively right-side point. In other words, the sub-RF waves may constructively interfere with one another at the relatively right-side point. Where beamforming is conducted at a relatively middle point, the wireless power transmission apparatus 100 may apply substantially the same delay to the left-side patch antennas (e.g., 111, 115, 119, and 123) and the right-side patch antennas (e.g., 114, 118, 122, and 126). Further, where beamforming is conducted at a relatively left-side point, the wireless power transmission apparatus 100 may apply a larger delay to the left-side patch antennas (e.g., 111, 115, 119, and 123) than to the right-side patch antennas (e.g., 114, 118, 122, and 126) of the wireless power transmission apparatus 100. Meanwhile, according to another embodiment of the present disclosure, the wireless power transmission apparatus 100 may substantially simultaneously generate sub-RF waves through all of the patch antennas 111 to 126 and may perform beamforming by adjusting the phase corresponding to the above-described delay.

As set forth above, the wireless power transmission apparatus 100 may determine the position of the electronic devices 150 and 160 and enable the sub-RF waves to constructively interfere with one another at the determined position, allowing for wireless charging at a higher transmission efficiency. In addition, the wireless power transmission apparatus 100 may be capable of high-transmission efficiency wireless charging based the determination of the positions of the electronic devices 150 and 160.

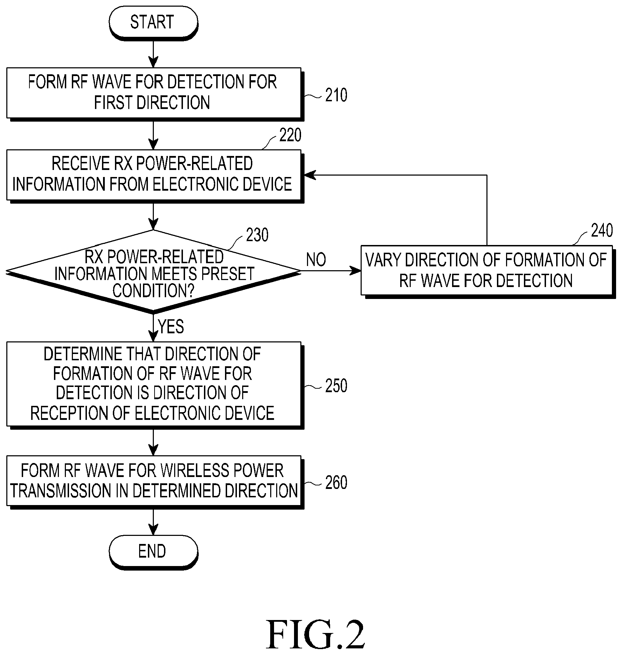

FIG. 2 is a flowchart illustrating a method for controlling a wireless power transmission apparatus according to various embodiments of the present disclosure.

In operation 210, the wireless power transmission apparatus, for example, the wireless power transmission apparatus 100 described with reference to FIG. 1 may form an RF wave for detection to detect an electronic device such as the electronic device 150 in FIG. 1 for a first direction. In operation 220, the wireless power transmission apparatus may receive RX (receive) power-related information from an electronic device. Here, the RX power-related information is information related to power that the electronic device receives from the wireless power transmission apparatus. For example, the RX power-related information may be the magnitude of voltage, current, or power, or temperature at a particular point, which is described below in further detail. In other words, the RX power-related information is not limited and may include additional information about the magnitude of power that the electronic device receives from the wireless power transmission apparatus. In operation 230, the wireless power transmission apparatus may determine whether the RX power-related information meets a preset condition. For example, the wireless power transmission apparatus may determine whether a voltage value at an output end of an electronic device rectifier, included in the RX power-related information, exceeds a preset threshold. The voltage value at the output end of the rectifier exceeding the preset threshold may mean that the electronic device has wirelessly received a sufficient magnitude of power.

Upon failure to meet the preset condition, the wireless power transmission apparatus as per the comparison example may vary or adjust the direction of formation of the RF wave for detection in operation 240. Failure to meet the preset condition may be determined to be the electronic device's failure to receive a sufficient magnitude or amount of power. In other words, the wireless power transmission apparatus may vary the direction of RF wave until the preset condition is satisfied. In an embodiment, the wireless power transmission apparatus may vary or adjust transmission of an RF wave in a particular direction by controlling at least one of the magnitude and phase of a sub-RF wave generated by a particular antenna in the wireless power transmission apparatus, and the sub-RF waves interfere with one another at a point in the particular direction. Upon meeting the preset condition, the wireless power transmission apparatus may determine that the direction of the RF wave for detection is the direction of the electronic device in operation 250. In operation 260, the wireless power transmission apparatus may form a RF wave for wireless power transmission in the determined direction. Meanwhile, as described above, varying the direction of formation of the RF wave until the preset condition causes determination of the position of the electronic device to take long.

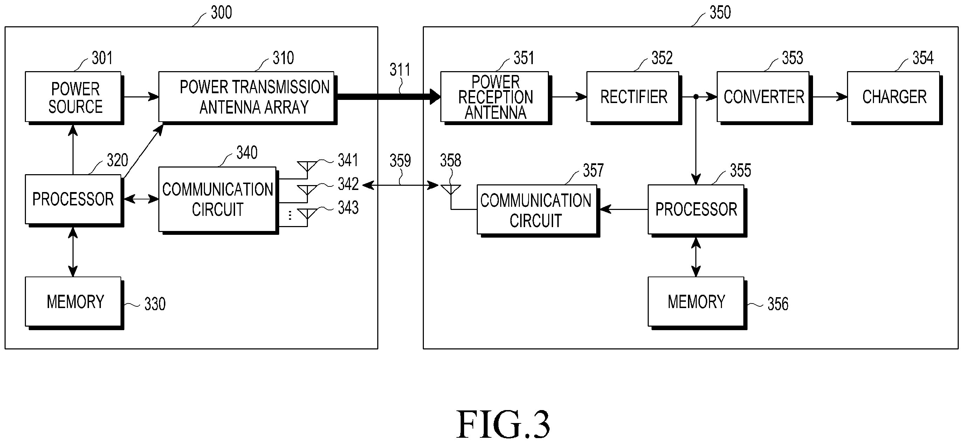

FIG. 3 is a block diagram illustrating a wireless power transmission apparatus according to various embodiments of the present disclosure.

A wireless power transmission apparatus 300 may include a power source 301, a power transmission antenna array (or an antenna array for power transmission) 310, a processor 320, a memory 330, a communication circuit 340, and antennas 341 to 343 for communication. An electronic device 350 is a device capable of wirelessly receiving power and may include a power reception antenna (or an antenna for power reception) 351, a rectifier 352, a converter 353, a charger 354, a processor 355, a memory 356, a communication circuit 357, and an antenna 358 for communication.

The power source 301 may provide power for transmission to the power transmission antenna array 310. The power source 301 may provide, e.g., direct current (DC) power, in which case the wireless power transmission apparatus 300 may further include an inverter (not shown) that converts DC power into alternating current (AC) power and delivers the AC power to the power transmission antenna array 310. Meanwhile, according to an embodiment of the present disclosure, the power source 301 may provide AC power to the power transmission antenna array 310.

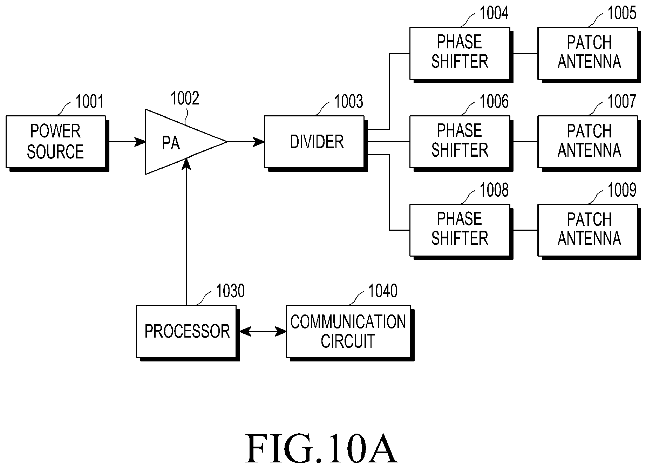

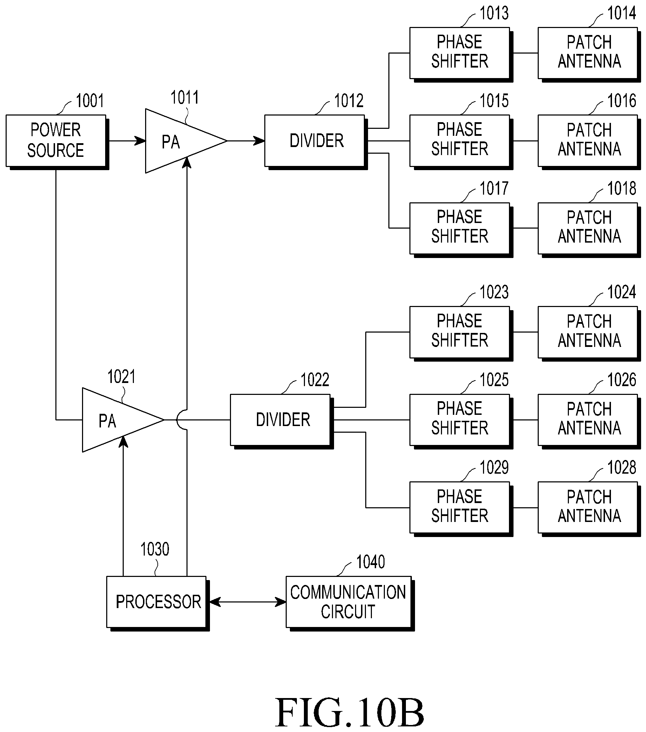

The power transmission antenna array 310 may include a plurality of patch antennas. For example, a plurality of patch antennas as shown in FIG. 1 may be included in the power transmission antenna array 310. The number or array form of the patch antennas is not limited. The power transmission antenna array 310 may form a RF wave using the power received from the power source 301. The power transmission antenna array 310 may form a RF wave in a particular direction under the control of the processor 320. Here, by controlling at least one of the amplitude and phase of sub-RF waves so that the sub-RF waves constructively interfere with one another at a point in the particular direction, the RF wave may be formed in the particular direction. For example, the processor 320 may control each of phase shifters connected to the power transmission antenna array 310, which is described below in more detail with reference to FIGs. 10a and 10b. Meanwhile, the power transmission antenna array 310 is one for transmitting power and may be termed an antenna for power transmission.

The processor 320 may determine the direction in which the electronic device 350 is positioned and form the RF wave based on the determined direction. In other words, the processor 320 may control the patch antennas of the power transmission antenna array 310 that generates sub-RF waves so that the sub-RF waves constructively interfere with one another at one point in the determined direction. For example, the processor 320 may control at least one of the amplitude and phase of the sub-RF wave generated from each patch antenna by controlling at least one of the patch antennas or a phase shifter (not shown) and a power amplifier (not shown) that is connected with the patch antennas.

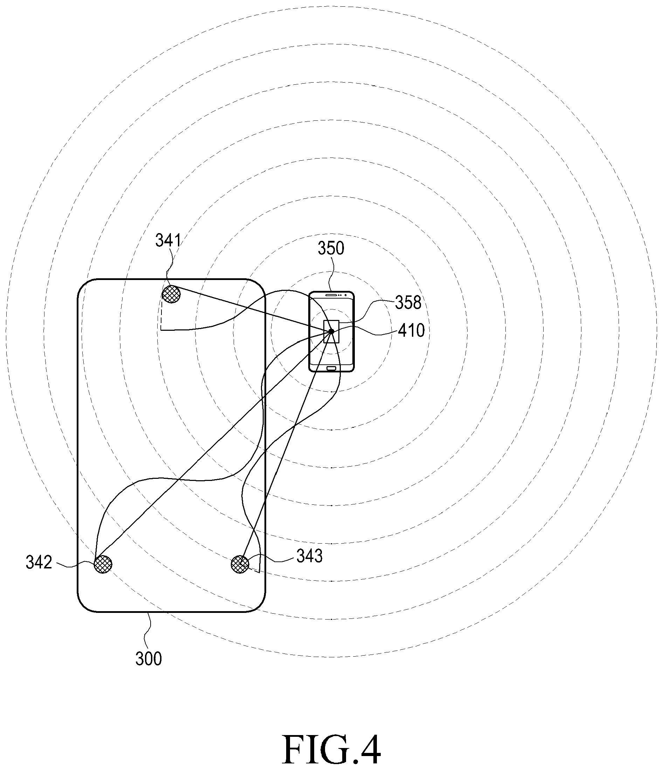

The processor 320 may determine the direction in which the electronic device 350 is positioned using communication signals received from the antennas 341 to 343 for communication. In other words, the processor 320 may control at least one of the amplitude and phase of the sub-RF wave generated from each patch antenna using the communication signals received from the communication antennas 341 to 343. Although three communication antennas 341 to 343 are shown, this is merely an example, and the number of communication antennas is not limited. For example, at least two communication antennas 341 and 342 may be included in an embodiment of the wireless power transmission apparatus 300. According to an embodiment of the present disclosure, at least three communication antennas 341 to 343 may be arranged, e.g., for the purpose of determining a three-dimensional (3D) direction, e.g., values θ and ϕ in the spherical coordinate system Specifically, the communication antenna 358 of the electronic device 350 may send out a communication signal 359. According to various embodiment of the present disclosure, the communication signal 359 may include identification information for identifying the electronic device 350 or may include information required for wireless charging. Thus, the wireless power transmission apparatus 300 may determine the direction of the electronic device 350 using the communication signal for wireless charging, even without a separate hardware structure. In addition, times of reception of the communication signal 359 by the communication antennas 341 to 343 may differ. This is described below in greater detail with reference to FIG. 4.

As illustrated in FIG. 4, the electronic device 350 may be positioned at a first point 410. The electronic device 350 may generate a communication signal that may propagate in space in the form of spherical waves as shown in FIG. 4. The spherical waves may propagate from the first point 410. The first point 410 may be the point where the communication antenna 358 is positioned. Accordingly, the time when the communication signal is received by a first communication antenna 341, the time when the communication signal is received by a second communication antenna 342, and the time when a third communication antenna 343 is received may differ. For example, the first communication antenna 341 closest to the first point 410 may first receive the communication signal, the second communication antenna 342 may next receive the communication signal next, and the third communication antenna 343 may last receive the communication signal. FIG. 4 shows mere an example, and although the communication signal has a directional waveform, the times of reception by the communication antennas 341, 342, and 343 may be different. According to various embodiments of the present disclosure, the wireless power transmission apparatus 300 may include three or more communication antennas, e.g., for the purpose of determining the direction of reception of the communication signal in a 3D space.

The processor 320 of the wireless power transmission apparatus 300 may determine a direction of the electronic device 350 relative to the wireless power transmission apparatus 300 using the times (e.g., t1, t2, and t3) of reception of the communication signal by the communication antennas 341, 342, and 343. For example, the processor 320 may determine a direction of the electronic device 350 relative to the wireless power transmission apparatus 300 using information about time differences t1-t2, t2-t3, and t3-t1. For example, as t1-t2 becomes closer to 0, the electronic device 350 may be determined to be more likely to be positioned on the line perpendicularly passing through the center of the line connecting the communication antenna 341 with the communication antenna 342. Further, as t1-t2 is a relatively larger positive value, the electronic device 350 may be determined to be more likely to be positioned closer to the communication antenna 342. Further, as t1-t2 is a relatively larger negative value, the electronic device 350 may be determined to be more likely to be positioned closer to the communication antenna 341. The wireless power transmission apparatus 300 may determine the 3D direction of the electronic device 350 relative to the wireless power transmission apparatus 300 by considering all of t2-t3 and t3-t1 as well as t1-t2. The processor 320 may determine a relative direction of the electronic device 350 using a method or process capable of determining a direction and stored in, e.g., the memory 330. According to another embodiment of the present disclosure, the processor 320 may determine a relative direction of the electronic device 350 using a lookup table between the direction of the electronic device and the difference in reception time per communication antenna, which is stored in, e.g., the memory 330. The wireless power transmission apparatus 300 (or the processor 320) may determine a relative direction of the electronic device 350 in various manners. For example, the wireless power transmission apparatus 300 (or the processor 320) may determine a relative direction of the electronic device 350 in various ways, such as time difference of arrival (TDOA) or frequency difference of arrival (FDOA), and the program or algorithm determining the direction of received signal is not limited in type.

Meanwhile, according to another embodiment of the present disclosure, the wireless power transmission apparatus 300 may determine a relative direction of the electronic device 350 based on the phase of a communication signal received. As illustrated in FIG. 4, the distances between the communication antenna 358 of the electronic device 350 and the communication antennas 341, 342, and 343 of the wireless power transmission apparatus 300 differ. Thus, the communication signal generated from the communication antenna 358 and received by each communication antenna 341, 342, and 343 may have a different phase. The processor 320 may determine the direction of the electronic device 350 based on the differences in phase of the communication signal received by the communication antennas 341, 342, and 343.

The processor 320 may form a RF wave in the direction of the electronic device 350 by controlling the power transmission antenna array 310 based on the direction of the electronic device 350. Meanwhile, the processor 320 may identify the electronic device 350 using information contained in the communication signal 359. The communication signal 359 may include the unique identifier and unique address of the electronic device. The communication circuit 340 may process the communication signal 359 and provide information to the processor 320. The communication circuit 340 and the communication antennas 341, 342, and 343 may be manufactured based on various communication schemes, such as wireless-fidelity (Wi-Fi), Bluetooth, zig-bee, and Bluetooth low energy (BLE), which are not limited to a particular type. Meanwhile, the communication signal 359 may include rated power information about the electronic device 350. The processor 320 may determine whether to charge the electronic device 350 based on at least one of the unique identifier, unique address, and rated power information of the electronic device 350. The processor 320 may include one or more of a central processing unit (CPU), an application processor (AP), or a communication processor (CP), and the processor 320 may be implemented as a micro-controller unit or a mini computer.

Further, the wireless power transmission apparatus 300 may use the communication signal 359 to identify the electronic device 350, to permit power transmission to the electronic device 350, to send a request for RX power-related information to the electronic device 350, and to receive the RX power-related information from the electronic device 350. In other words, the communication signal 359 may be used in a process for a subscription, command, or request between the wireless power transmission apparatus 300 and the electronic device 350.

Meanwhile, the processor 320 may control the power transmission antenna array 310 to form a RF wave 311 in the determined direction of the electronic device 350. The processor 320 may form a RF wave for detection and determine the distance to the electronic device 350 using another communication signal subsequently received as a feedback, which is described below in greater detail.

Thus, the processor 320 may determine both the direction of the electronic device 350 and the distance to the electronic device 350 and may thus determine the position of the electronic device 350. The processor 320 may control the patch antennas so that the sub-RF waves generated from the patch antennas may constructively interfere with one another at the position of the electronic device 350. Therefore, the RF wave 311 may be transferred to the power reception antenna 351 at a relatively high transmission efficiency. The power reception antenna 351 in the electronic device 350 may be configured to receive RF waves. Further, the power reception antenna 351 may be implemented in the form of an array of a plurality of antennas. The AC power received by the power reception antenna 351 may be rectified into DC power by the rectifier 352. The converter 353 may convert the DC power into a voltage required and provide the voltage to the charger 354. The charger 354 may charge a battery (not shown). Although not shown, the converter 353 may provide the converted power to a power management integrated circuit (PMIC) (not shown), and the PMIC (not shown) may provide power to various hardware structures of the electronic device 350.

In addition, the processor 355 may monitor the voltage at the output end of the rectifier 352. For example, the electronic device 350 may further include a voltage meter connected to the output end of the rectifier 352. The processor 355 may receive a voltage value from the voltage meter and monitor the voltage at the output end of the rectifier 352. The processor 355 may provide information containing the voltage value at the output end of the rectifier 352 to the communication circuit 357. Although the charger 354, the converter 353, and the PMIC may be implemented in different hardware units, at least two of them may be integrated into a single hardware unit.

The voltage meter may be implemented in various types, such as an electrodynamic instrument voltage meter, an electrostatic voltage meter, or a digital voltage meter, without limited in type thereto. The communication circuit 357 may send out the communication signal including RX power-related information using the communication antenna 358. The RX power-related information may be information associated with the magnitude of power received, such as, e.g., the voltage at the output end of the rectifier 352, and may contain a current at the output end of the rectifier 352. In this case, the electronic device 350 may further include a current meter capable of measuring the current at the output end of the rectifier 352. The current meter may be implemented in various types, such as a DC current meter, AC current meter, or digital current meter, without limited in type thereto. Further, the RX power-related information may be measured at any point of the electronic device 350, but not only at the output or input end of the rectifier 352.

Further, as set forth above, the processor 355 may send out a communication signal 359 containing identification information about the electronic device 350. The memory 356 may store a method or process capable of controlling various hardware units of the electronic device 350.

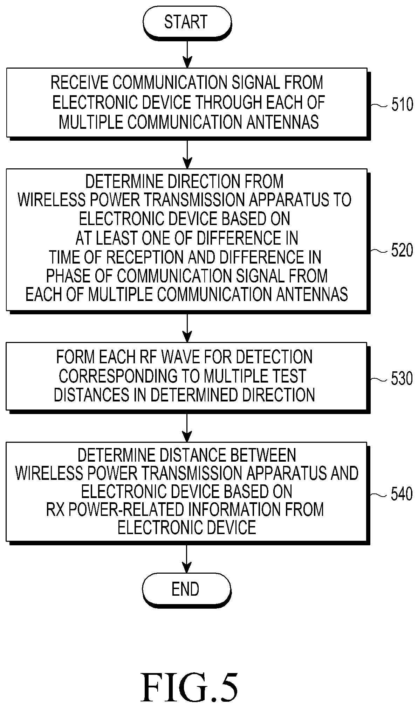

FIG. 5 is a flowchart illustrating a method for controlling a wireless power transmission apparatus according to various embodiments of the present disclosure.

In operation 510, a wireless power transmission apparatus (or a processor) may receive a communication signal from an electronic device through each of a plurality of communication antennas. In operation 520, the wireless power transmission apparatus may determine the direction from the wireless power transmission apparatus to the electronic device based on at least one of differences in time of reception and differences in phase between communication signals respectively received through the plurality of communication antennas.

In operation 530, the wireless power transmission apparatus (or a plurality of patch antennas) may control the plurality of patch antennas to form a RF wave for detection corresponding to each of a plurality of test distances in the determined direction.

In operation 540, the wireless power transmission apparatus may determine the distance between the wireless power transmission apparatus and the electronic device based on the RX power-related information from the electronic device. More specifically, the wireless power transmission apparatus may provide a first magnitude of power to the plurality of patch antennas. The RF waves may be formed to have a first distance, and the wireless power transmission apparatus may receive the RX power-related information (e.g., the voltage at the output end of the rectifier of the electronic device) from the electronic device. The wireless power transmission apparatus may also provide a second magnitude of power to the plurality of patch antennas. The RF waves may be formed to have a second distance, and the wireless power transmission apparatus may receive the RX power-related information (e.g., the voltage at the output end of the rectifier of the electronic device) from the electronic device. Here, varying the distance of formation of the RF wave may mean that the wireless power transmission apparatus may vary the point where the sub-RF waves constructively interfere with one another. For example, the distance of formation of RF wave may be varied by changing the magnitude of power applied to the patch antennas.

In an embodiment, where the electronic device is positioned away from the wireless power transmission apparatus by the second distance, a relatively large magnitude of power may be received where the wireless power transmission apparatus forms a second distance of RF wave. Accordingly, the voltage at the output end of the electronic device may have a relatively large value. The wireless power transmission apparatus may determine that the electronic device is positioned away from the wireless power transmission apparatus by the second distance, based on the RX power-related information (e.g., the voltage at the output end of the rectifier) from the electronic device. The wireless power transmission apparatus may previously store information about the relationship between the distance and magnitude of power applied and may determine the distance using the relationship information. Meanwhile, according to an embodiment of the present disclosure, the wireless power transmission apparatus may not determine the distance to the electronic device which is described below in greater detail.

The wireless power transmission apparatus may determine the position of the electronic device by determining the distance from the wireless power transmission apparatus and the direction of the electronic device. The wireless power transmission apparatus may control each of the plurality of patch antennas so that the sub-RF waves may constructively interfere with one another at the position of the electronic device.

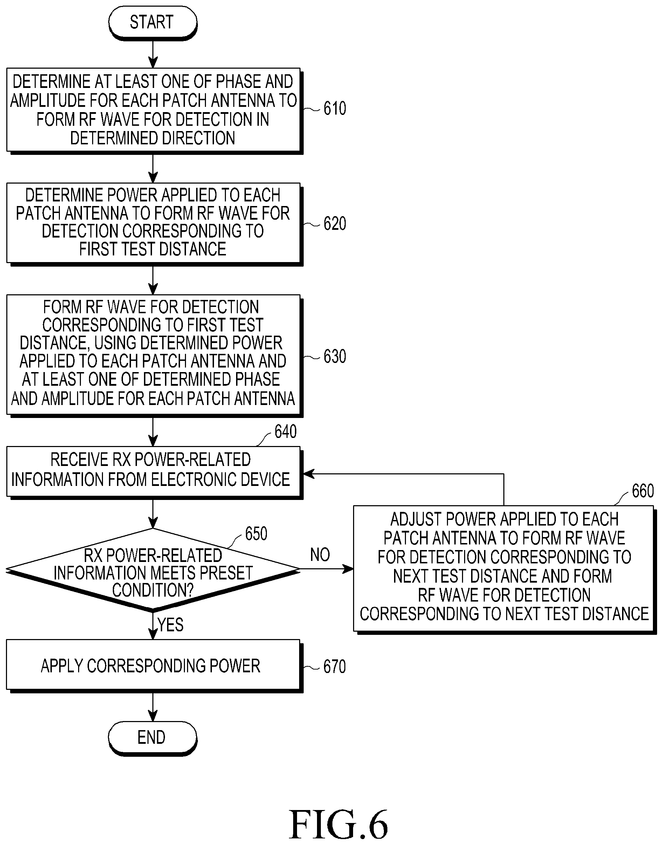

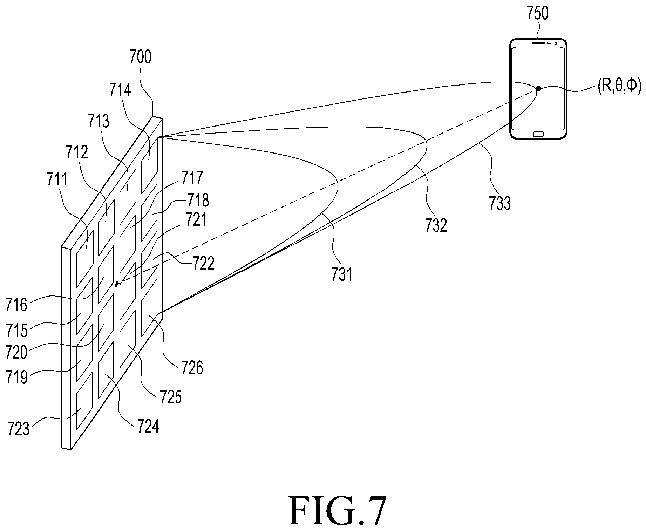

FIG. 6 is a flowchart illustrating a method for controlling a wireless power transmission apparatus according to various embodiments of the present disclosure. The embodiment of FIG. 6 will be described in more detail with reference to FIG. 7. FIG. 7 is a concept view illustrating a configuration for determining the distance between a wireless power transmission apparatus and an electronic device 750 according to an embodiment of the present disclosure.

In operation 610, as illustrated in, e.g., FIG. 7, the wireless power transmission apparatus 700 may determine at least one of the phase and amplitude of sub-RF waves generated from the patch antennas 711 to 726 to form a RF wave for detection in a determined direction (θ,ϕ). For example, upon determining that the electronic device 750 is positioned relatively at a right side of the wireless power transmission apparatus 700, the wireless power transmission apparatus 700 may apply a relatively large delay to sub-RF waves generated from patch antennas positioned relatively at a right side, compared to sub-RF waves generated from patch antennas positioned relatively at a left side of the wireless power transmission apparatus 700, so that the sub-RF waves generated from the plurality of patch antennas 711 to 726 may constructively interfere with one another relatively at a right side, by considering the position of each patch antenna 711 to 726 in the wireless power transmission apparatus 700 with respect to the electronic device 750. In other words, the sub-RF waves from the patch antennas positioned relatively at a right side of the wireless power transmission apparatus 700 may be generated later than the sub-RF waves from the patch antennas positioned relatively at a left side of the wireless power transmission apparatus 700, and accordingly, the sub-RF waves from the patch antennas may simultaneously meet, i.e., constructively interfere with one another at a relatively right-side point. In addition, as described above, the wireless power transmission apparatus 700 may form sub-RF waves from all the patch antennas 711 to 726 substantially at the same time. In this case, the wireless power transmission apparatus 700 may adjust the phase of the sub-RF waves respectively generated from the patch antennas 711 to 726, allowing the sub-RF waves to constructively interfere with one another relatively at a right side of the wireless power transmission apparatus 700.

Further, upon determining that the electronic device 750 is positioned relatively at an upper side of the wireless power transmission apparatus 700, the wireless power transmission apparatus 700 may apply a relatively large delay to sub-RF waves generated from patch antennas positioned relatively at an upper side of the wireless power transmission apparatus 700, so that the sub-RF waves generated from the plurality of patch antennas 711 to 726 may constructively interfere with one another relatively at an upper side. In other words, the sub-RF waves from the patch antennas positioned relatively at an upper side may be generated later than or subsequent to the sub-RF waves from the patch antennas positioned relatively at a lower side, and accordingly, the sub-RF waves from the patch antennas may simultaneously meet, i.e., constructively interfere with one another at a relatively upper-side point. The wireless power transmission apparatus 700 may apply different delays to the patch antennas 711 to 726, respectively, arranged in two-dimension (2D), allowing the RF wave generated by each of the patch antennas 711 to 726 to have a different phase.

In operation 620, the wireless power transmission apparatus 700 may determine the magnitude of power applied to each patch antenna 711 to 726 so that a RF wave 731 for detection is formed corresponding to a first test distance. In various embodiments, the wireless power transmission apparatus 700 may directly determine the magnitude of first test power provided to the plurality of patch antennas 711 to 726 without determining distance. Here, the first test distance or the magnitude of the first test power may have a default value.

In operation 630, the wireless power transmission apparatus 700 may form a RF wave 731 corresponding to the first test distance using the determined power applied to each patch antenna 711 to 726 and at least one of the determined phase and amplitude of the RF wave generated by each patch antenna 711 to 726.

In operation 640, the wireless power transmission apparatus 700 may receive information related to power received by the electronic device 750, i.e., RX power-related information, from the electronic device 750. In operation 650, the wireless power transmission apparatus 700 may determine whether the RX power-related information meets a preset condition. For example, the wireless power transmission apparatus 700 may determine whether the voltage at the output end of the rectifier of the electronic device 750, which is the RX power-related information, exceeds a preset threshold, e.g., an optimal power operating threshold for the electronic device 750 to operate at its optimum capacity.

When the RX power-related information fails to meet the preset condition, the wireless power transmission apparatus 700 may form a RF wave 732 for detection corresponding to a next test distance by adjusting the power applied to each patch antenna 711 to 726 in operation 660 so as to form the RF wave 732 for detection corresponding to the next test distance.

As set forth supra, the wireless power transmission apparatus 700 may determine the magnitude of next test power without determining a test distance and apply the same to each patch antenna 711 to 726. Meanwhile, although FIG. 7 illustrates that the wireless power transmission apparatus 700 increases the test distance, i.e., the magnitude of power applied, in the embodiment, this is merely an example. The wireless power transmission apparatus 700 may also reduce the test distance, i.e., the magnitude of power applied. In addition, the wireless power transmission apparatus 700 may adjust the magnitude of power applied to each patch antenna 711 to 726 until the RX power-related information meets the preset condition.

When the RX power-related information meets the preset condition, the wireless power transmission apparatus 700 may maintain the power applied to each patch antenna to send out a RF wave and perform wireless charging in operation 670. In the embodiment shown in FIG. 7, where a RF wave 733 is formed to have a third test distance, the RX power-related information may be determined to be met. The wireless power transmission apparatus 700 may maintain the magnitude of power applied to each patch antenna 711 to 726 so as to maintain the formation of the RF wave 733 in the third test distance. The wireless power transmission apparatus 700 may determine that the distance to the electronic device 750 is the third test distance R or may control only power applied to each patch antenna 711 to 726 without determination as to the distance to the electronic device 750.

As described above, the wireless power transmission apparatus 700 may determine the distance to the electronic device 750 and may control the patch antennas so that the sub-RF waves constructively interfere with one another at a corresponding point, allowing for wireless transmission at a relatively high transmission efficiency.

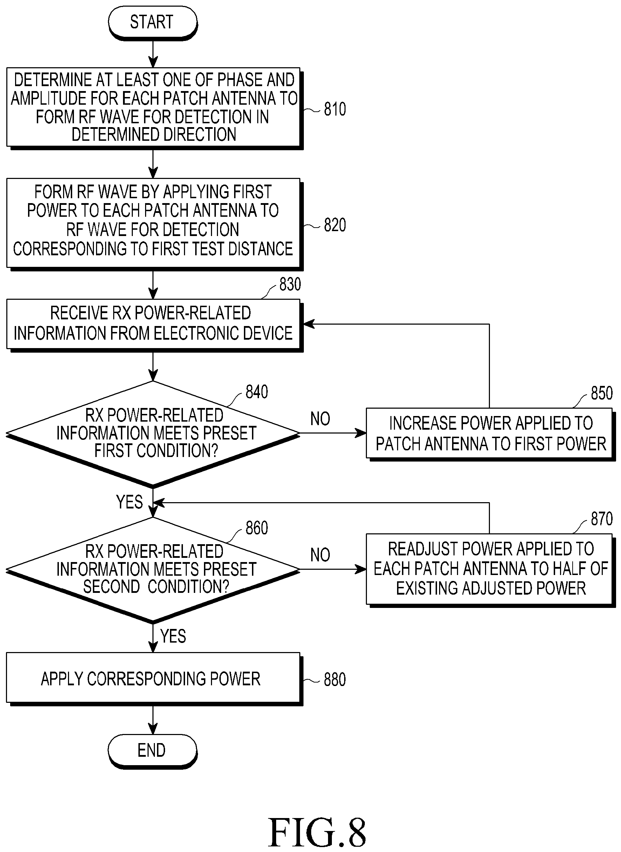

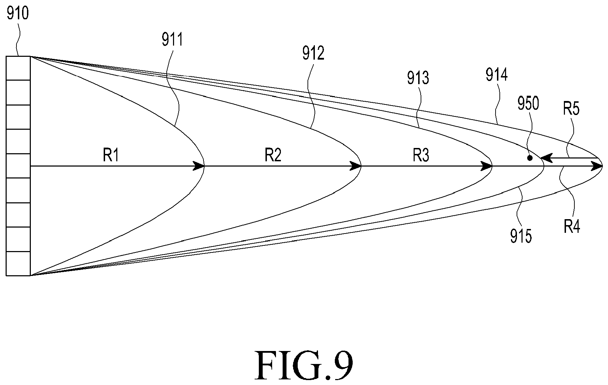

FIG. 8 is a flowchart illustrating a method for controlling a wireless power transmission apparatus according to various embodiments of the present disclosure. The embodiment shown in FIG. 8 is described in greater detail with reference to FIG. 9. FIG. 9 is a concept view illustrating a binary detection method according to various embodiments of the present disclosure.

Operations 810 to 830 are substantially similar to operations 610 to 630 of FIG. 6, and the description previously provided for those functions is incorporated herein.

As illustrated in FIG. 9, in operation 840, the wireless power transmission apparatus may determine whether the RX power-related information meets a preset first condition. Here, the first condition may be a condition corresponding to where the distance between the electronic device and the point where the sub-RF waves constructively interfere with one another is less than a first threshold. As the distance between the electronic device and the point where the sub-RF waves constructively interfere with one another increases, the electronic device receives a relatively small magnitude of power. Accordingly, e.g., the voltage at the output end of the rectifier of the electronic device has a relatively small value. Resultantly, the distance between the electronic device and the point where the sub-RF waves constructively interfere with one another is associated with RX power-related information about the electronic device, e.g., the voltage at the output end of the rectifier. For example, the voltage at the output end of the rectifier of the electronic device being more than 5V and not more than 10V may be the first condition, and exceeding 10V may be a second condition, wherein the voltage values are mere examples. The second condition may be a condition corresponding to where the distance between the electronic device and the point where the sub-RF waves constructively interfere with one another is less than a second threshold. The second threshold may be smaller than the first threshold.

Further, the above-described conditions may be set to be different per type of electronic device.

Upon determining that the RX power-related information fails to meet the first condition, the wireless power transmission apparatus may increase the power applied to the patch antenna 910 up to first power in operation 850. Referring to FIG. 9, it can be shown that the patch antenna 910 used to first form a RF wave 911 in a distance R1 forms a RF wave 912 in a distance R2. This can be attributed to an increase of power applied to the patch antenna 910 to the first power. Meanwhile, the wireless power transmission apparatus may increase the power applied to the patch antenna 910 to the first power until the RX power-related information meets the preset first condition. Thus, as shown in FIG. 9, RF waves 913 and 914 may be formed from the patch antenna 910 at points R3 and R4.

Upon determining that the RX power-related information meets the first condition, the wireless power transmission apparatus may determine whether the RX power-related information meets a preset second condition in operation 860.

Upon determining that the RX power-related information fails to meet the second condition, the wireless power transmission apparatus may readjust the power applied to the patch antenna 910 to a half of the adjusted existing power in operation 870. For example, as shown in FIG. 9, the wireless power transmission apparatus may reduce the power applied to each patch antenna 910 to a half of the first power which is adjusted existing power. Accordingly, a RF wave 915 may be formed in a distance positioned R5 behind point R4. Upon determining that the RX power-related information meets the preset second condition, the wireless power transmission apparatus may maintain the magnitude of power applied to the patch antenna in operation 880. For example, where the electronic device is positioned at a point 950, the second condition may be met, and the wireless power transmission apparatus may conduct wireless charging on the electronic device positioned at the point 950. At least some of the advantages of the above process may include a quick determination of the distance between the wireless power transmission apparatus and the electronic device or a determination of the magnitude of power applied to each patch antenna for swift wireless charging.

FIGs. 10a and 10b are block diagrams illustrating a wireless power transmission apparatus according to various embodiments of the present disclosure.

Referring to FIG. 10a, a power source 1001 may be connected to a power amplifier (PA) 1002. The power amplifier 1002 may amplify power provided from the power source, and its amplification gain of the power amplifier 1002 may be controlled by a processor 1030. For example, the processor 1030 may determine the direction of an electronic device using a communication signal of the electronic device delivered from a communication circuit 1040. Further, as described above, in order to determine the distance between the wireless power transmission apparatus and the electronic device in the determined direction or determine the magnitude of power applied to each patch antenna for which RX power-related information meets a preset condition, the processor 1030 may control the amplification gain of the power amplifier 1002 to form a plurality of RF waves.

Meanwhile, the power amplified by the power amplifier 1002 may be provided to a divider 1003. The divider 1003 may divide power to a plurality of patch antennas 105, 1007, and 1009. Meanwhile, phase shifters 1004, 1006, and 1008 may be arranged between the divider 1003 and the patch antennas 1005, 1007, and 1009. The number of the phase shifters and the number of the patch antennas are merely examples, and a different number of phase shifters or a different number of patch antennas may also be provided. As the phase shifters, hardware components, such as the Hittite Microwave Corporation (HMC) 642 or HMC 1113, may be used. The phase shifters 1004, 1006, and 1008 may shift the phase of AC power received, and the processor 1030 may control the degree of shift by the phase shifters 1004, 1006, and 1008. The processor 1030 may determine the degree of shift inputted to each of the phase shifters 1004, 1006, and 1008 so that a RF wave may be formed in the direction of the electronic device determined using the communication signal.

FIG. 10b is a block diagram illustrating a wireless power transmission apparatus according to another embodiment of the present disclosure. In contrast to the embodiment of FIG. 10A, where all of the patch antennas 1005, 1007, and 1009 are connected to one divider 1003 and one power amplifier 1002, the embodiment of FIG. 10B allows the wireless power transmission apparatus to include a plurality of power amplifiers 1011 and 1021. Further, the wireless power transmission apparatus may include dividers 1012 and 1022 respectively connected to the plurality of power amplifiers 1011 and 1021. Phase shifters 1013, 1015, and 1017 and patch antennas 1014, 1016, and 1018 connected to the phase shifters 1013, 1015, and 1017 may be connected to the divider 1012. Phase shifters 1023, 1025, and 1027 and patch antennas 1024, 1026, and 1028 connected to the phase shifters 1023, 1025, and 1027 may be connected to the divider 1022.

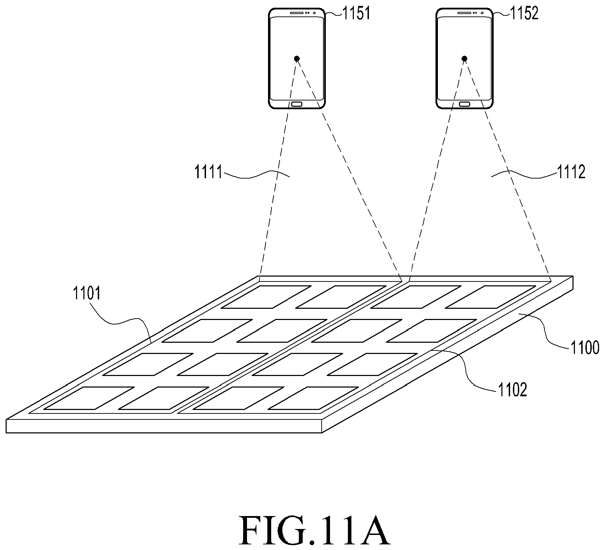

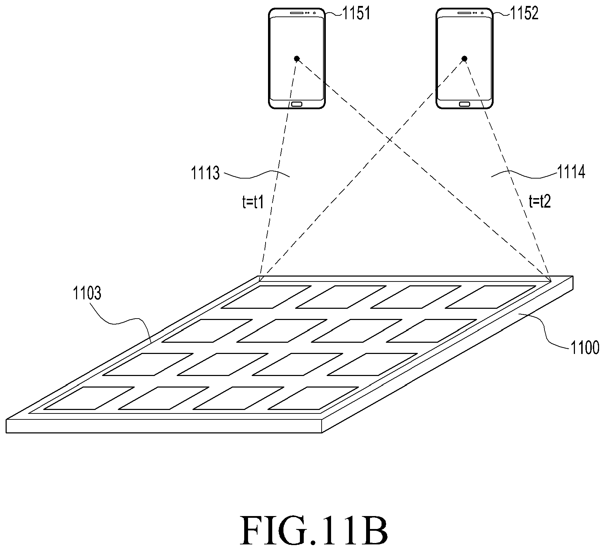

FIGs. 11a and 11b are concept views illustrating wireless charging for a plurality of electronic devices.

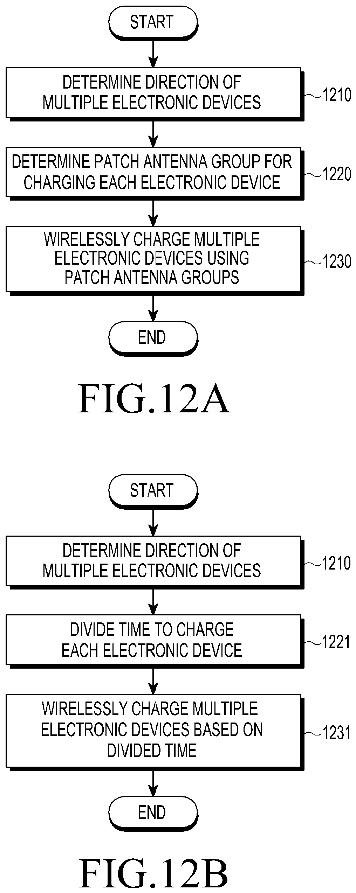

The embodiment shown in FIG. 11a is described in greater detail with reference to FIG. 12a. Referring to FIG. 12A, a wireless power transmission apparatus 1100 may determine the direction of a plurality of electronic devices 1151 and 1152 in operation 1210. The wireless power transmission apparatus 1100 may determine the direction of the electronic device 1151 based on a communication signal from the first electronic device 1151 and the direction of the electronic device 1152 based on a communication signal from the second electronic device 1152.

In operation 1220, the wireless power transmission apparatus 1100 may determine patch antenna groups 1101 and 1102 to charge the plurality of electronic devices 1151 and 1152, respectively. In operation 1230, the wireless power transmission apparatus 1100 may wirelessly charge the plurality of electronic devices 1151 and 1152 using the patch antenna groups 1101 and 1102. The wireless power transmission apparatus 1100 may determine the distance from the first electronic device 1151 using the patch antenna group 1101 and perform wireless charging based on the determined distance. Further, the wireless power transmission apparatus 1100 may determine the distance from the second electronic device 1152 using the patch antenna group 1102 and perform wireless charging based on the determined distance. Meanwhile, according to an embodiment of the present disclosure, the wireless power transmission apparatus 1100 may also perform wireless charging without determining distance as set forth above. According to various embodiments of the present disclosure, the wireless power transmission apparatus 1100 may select the patch antenna groups 1101 and 1102 depending on the direction of each of the plurality of electronic devices 1151 and 1152. For example, for the first electronic device 1151 determined to be positioned relatively at a left side of the wireless power transmission apparatus 1100, the wireless power transmission apparatus 1100 may select the patch antenna group 1101 which is positioned relatively at a left side. For the second electronic device 1152 determined to be positioned relatively at a right side of the wireless power transmission apparatus 1100, the wireless power transmission apparatus 1100 may select the patch antenna group 1102 which is positioned relatively at a right side of the wireless power transmission apparatus 1100. The patch antenna group 1101 may form a RF wave 1111 to charge the first electronic device 1151, and the patch antenna group 1102 may form a RF wave 1112 to charge the second electronic device 1152.

Further, the wireless power transmission apparatus 1100 may select the number of patch antennas included in the patch antenna group based on the rated power of each of the plurality of electronic devices 1151 and 1152. For example, the wireless power transmission apparatus 1100 may assign relatively more patch antennas to the electronic device with relatively high rated power. As set forth above, the plurality of electronic devices 1151 and 1152 may simultaneously be charged.

The embodiment shown in FIG. 11b is described in greater detail with reference to FIG. 12b. Referring to FIG. 12B, a wireless power transmission apparatus 1100 may determine the direction of a plurality of electronic devices 1151 and 1152 in operation 1210. In operation 1221, the wireless power transmission apparatus 1100 may divide time to charge each of the plurality of electronic devices 1151 and 1152. In operation 1231, the wireless power transmission apparatus 1100 may wirelessly charge the plurality of electronic devices 1151 and 1152 based on the divided charging time. For example, as shown in FIG. 1 lb, each of the patch antennas 1103 may be controlled to form a sub-RF wave to form a RF wave 1113 to charge the first electronic device 1151 for a first time t1, and the overall patch antenna 1103 may be used to form a RF wave 1114 to charge the second electronic device 1152 for a second time t2. According to various embodiments of the present disclosure, the wireless power transmission apparatus 1100 may select the electronic device 1151 or 1152 to be first charged depending on priority of the electronic devices 1151 and 1152. In other words, the wireless power transmission apparatus 1100 may complete the charging of the higher-priority electronic device and may then perform charging of the next-priority electronic device. Or, the wireless power transmission apparatus 1100 may alternately charge the electronic devices 1151 and 1152. In other words, after charging the higher-priority electronic device for a predetermined time, even before completing the charging, the wireless power transmission apparatus 1100 may charge the next-priority electronic device for a predetermined time and may then resume the charging of the higher-priority electronic device.

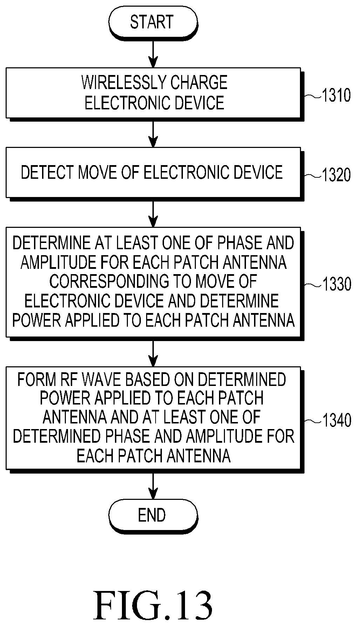

FIG. 13 is a flowchart illustrating a method for controlling a wireless power transmission apparatus according to various embodiments of the present disclosure.

In operation 1310, a wireless power transmission apparatus may wirelessly charge an electronic device. The wireless power transmission apparatus may perform the wireless charging using the direction of the electronic device and the distance to the electronic device as set forth above.

In operation 1320, the wireless power transmission apparatus may detect a move of the electronic device. In one embodiment, the wireless power transmission apparatus may detect the move of the electronic device based on RX power-related information from the electronic device. As the electronic device moves, the electronic device might not receive sufficient power by the RF wave generated by constructive interference at the point where the electronic device used to be located. Accordingly, e.g., the voltage at the output end of the electronic device also reduces, and the wireless power transmission apparatus may detect the move of the electronic device, corresponding to the RX power-related information's failure to meet a preset condition.

Alternatively, the wireless power transmission apparatus may detect the move of the electronic device based on a communication signal from the electronic device. The wireless power transmission apparatus may continuously receive communication signals from the electronic device and may continue to monitor the direction of the electronic device using the communication signals. Thus, the wireless power transmission apparatus may detect a variation in the direction where the electronic device is positioned.

According to another embodiment of the present disclosure, the wireless power transmission apparatus may directly receive information about the move of the electronic device from the electronic device. The electronic device may include various sensors, such as a gyro sensor, a linear sensor, a geo-magnetic sensor, and a global positioning satellite (GPS) sensor, which is capable of detecting a move. The electronic device may detect the move of the electronic device using the various sensors, generate the move information as a communication signal, include the same in the communication signal, and send out the communication signal to the wireless power transmission apparatus. The wireless power transmission apparatus may detect the move of the electronic device using the received move information.

In operation 1330, the wireless power transmission apparatus may determine at least one of the phase and amplitude for each patch antenna corresponding to the move of the electronic device and may determine power applied to each patch antenna. In operation 1340, the wireless power transmission apparatus may form a RF wave based on the determined power applied to each patch antenna and at least one of the determined phase and amplitude for each patch antenna. In other words, the wireless power transmission apparatus may control each patch antenna so that sub-RF waves may constructively interfere with one another at the position of the electronic device that has moved. The wireless power transmission apparatus may re-detect the post-move position of the electronic device as per the above-described manner or may control the patch antennas directly using the move information.

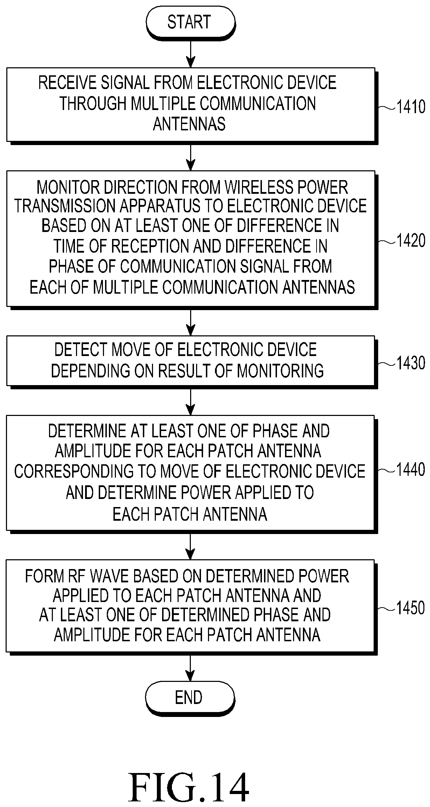

FIG. 14 is a flowchart illustrating a method for controlling a wireless power transmission apparatus according to various embodiments of the present disclosure.

In operation 1410, the wireless power transmission apparatus may receive signals from an electronic device through a plurality of communication antennas. In operation 1420, the wireless power transmission apparatus may monitor the direction from the wireless power transmission apparatus to the electronic device based on at least one of differences in time of reception and differences in phase between the communication signals respectively received by the plurality of communication antennas. For example, as the electronic device moves, the difference in time of reception or the difference in phase may vary between the communication antennas. In operation 1430, the wireless power transmission apparatus may detect a move of the electronic device depending on the result of monitoring.

In operation 1440, the wireless power transmission apparatus may determine at least one of the phase and amplitude for each patch antenna corresponding to the move of the electronic device and may determine power applied to each patch antenna. The wireless power transmission apparatus may determine at least one of the phase and amplitude for each patch antenna corresponding to the post-move position of the electronic device and may determine power applied to each patch antenna. In operation 1450, the wireless power transmission apparatus may form a RF wave based on the determined power applied to each patch antenna and at least one of the determined phase and amplitude for each patch antenna. Accordingly, the sub-RF waves may constructively interfere with one another at the post-move position of the electronic device.

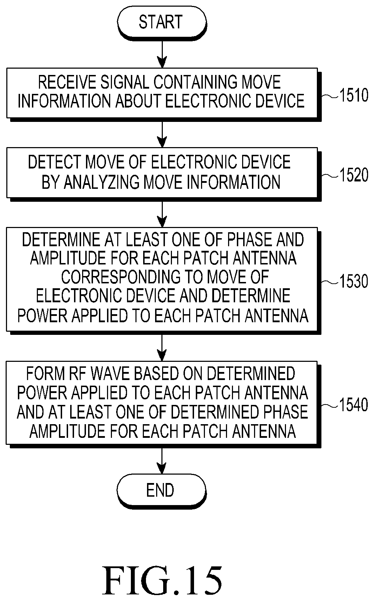

FIG. 15 is a flowchart illustrating a method for controlling a wireless power transmission apparatus according to various embodiments of the present disclosure.

In operation 1510, the wireless power transmission apparatus may receive a communication signal containing move information about an electronic device. In operation 1520, the wireless power transmission apparatus may detect the move of the electronic device by analyzing the move information. As set forth above, the electronic device may obtain the move information using a sensor configured to detect a move and send out a communication signal containing the obtained move information.

Meanwhile, operations 1530 and 1540 are substantially similar to operations 1440 and 1450 of FIG. 14, and no further detailed description thereof is presented.

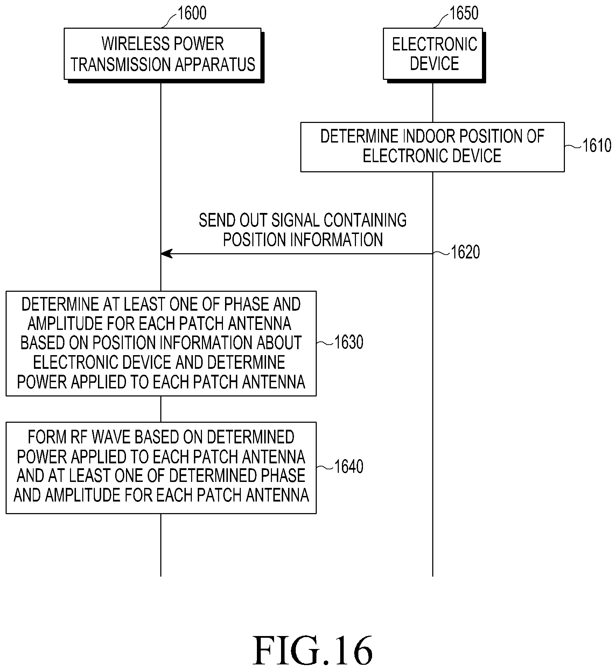

FIG. 16 is a flowchart illustrating operations of a wireless power transmission apparatus and an electronic device according to various embodiments of the present disclosure.

In operation 1610, an electronic device may determine its position. The electronic device may determine its position based on various indoor positioning schemes. For example, the electronic device may acquire an indoor geo-magnetic map and compare data sensed by a geo-magnetic sensor with the acquired geo-magnetic map. The electronic device may determine its indoor position based on the result of the comparison. Or, the electronic device may also determine its indoor position based on a Wi-Fi signal-based indoor positioning scheme. Or, where the electronic device is positioned outdoors, the electronic device may determine its position using a GPS module.

In operation 1620, the electronic device may send out a signal containing the position information.

In operation 1630, a wireless power transmission apparatus may determine at least one of the phase and amplitude for each patch antenna based on the position information from the electronic device and may determine the magnitude of power applied to each patch antenna. In operation 1640, the wireless power transmission apparatus may form a RF wave based on the determined power applied to each patch antenna and at least one of the determined phase and amplitude for each patch antenna.

According to various embodiments of the present disclosure, there is provided a storage medium storing commands configured to be executed by at least one processor to enable the at least one processor to perform at least one operation that may include determining a direction in which an electronic device is positioned based on a time of reception of a first communication signal from the electronic device through each of a plurality of communication antennas included in the electronic device, controlling a plurality of patch antennas included in a wireless power transmission apparatus so that sub-RF waves of a first magnitude constructively interfere with one another in the determined direction, and determining whether to charge the electronic device with the sub-RF waves of the first magnitude based on a second communication signal received from the electronic device.

According to various embodiments of the present disclosure, there is provided a storage medium storing commands configured to be executed by at least one processor to enable the at least one processor to perform at least one operation that may include receiving a first communication signal including a position of an electronic device from the electronic device and controlling a plurality of patch antennas included in a wireless power transmission apparatus so that sub-RF waves constructively interfere with one another at the position of the electronic device.

The above-described commands may be stored in an external server and may be downloaded and installed on an electronic device, such as a wireless power transmission apparatus. In other words, according to an embodiment of the present disclosure, the external server may store commands that are downloadable by the wireless power transmission apparatus.

As is apparent from the foregoing description, according to embodiments, there is provided a wireless power transmission apparatus that determines a direction of power transmission using communication signals from an electronic device and determines the precise position of the electronic device and a method for controlling the wireless power transmitting device. In accordance with many of the advantages of the various embodiments described above, the time required to determine a location of the electronic device and to transmit harmful radio waves may be saved.

The transmitters, devices, elements dividers, shifters, and other structural elements in FIGs. 1, 3, 10A, and 10B that perform the operations described in this specification are implemented by hardware components configured to perform the operations described in this specification that are performed by the hardware components. Examples of hardware components that may be used to perform the operations described in this specification, including controllers, sensors, generators, drivers, memories, comparators, arithmetic logic units, adders, subtractors, multipliers, dividers, integrators, and any other electronic components are configured to perform the operations described in this specification. In other examples, one or more hardware components that perform the operations described in this specification are implemented by computing hardware, for example, by one or more processors or computers. A processor or computer may be implemented by a combination of devices that is configured to respond to and execute instructions in a defined manner to achieve a desired result, or any other device, or one or more processing elements, such as an array of logic gates, a controller and an arithmetic logic unit, a digital signal processor, a microcomputer, a programmable logic controller, a field-programmable gate array, a programmable logic array, or a microprocessor. In an embodiment, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described herein. The hardware components may also access, manipulate, process, create, and store data in response to execution of the instructions or software. For simplicity, the singular term "processor" or "computer" may be used in the description of the examples described herein, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, multiple-instruction multiple-data (MIMD) multiprocessing, etc.

The methods illustrated in FIGs. 2, 5, 6, 8, 12A, 12B, and 13 through 16 that perform the operations described herein may be performed by computing hardware, for example, by one or more processors or computers, and implemented, as described above, with software or execution instructions to perform the operations described herein that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

For example, instructions or software for controlling computing hardware, for example, one or more processors or computers, to perform the methods as described above and implement the hardware components may be written as computer programs, code segments, instructions or any combination thereof, for individually or collectively instructing or configuring the one or more processors or computers to operate as a machine or special-purpose computer for performing the operations that are performed by the hardware components and the methods as described above. In one example, the instructions or software may include a machine code that is directly executed by the one or more processors or computers, such as a machine code produced by a compiler. In another example, the instructions or software may include a higher-level code that is executed by the one or more processors or computer using an interpreter. The instructions or software may be written using any programming language based on the flowcharts and the block diagrams described in the description of the specification corresponding to the drawings, and this specification discloses algorithms for performing the operations that are performed by the hardware components and the above-described methods.

The instructions or software, any data, data files, and data structures for controlling computing hardware, for example, one or more processors or computers, to perform the above-described methods and implement the hardware components may be recorded, stored, or fixed in or on one or more non-transitory computer-readable storage media. Examples of a non-transitory computer-readable storage medium may include read-only memory (ROM), random-access memory (RAM), flash memory, compact disc (CD)-ROMs, CD-recordables (CD-Rs), CD+Rs, CD-rewritables (RWs), CD+RWs, digital versatile disc (DVD)-ROMs, DVD-Rs, DVD+Rs, DVD-RWs, DVD+RAMs, Blue-ray(BD)-ROMs, BD-recordables (Rs), BD-R low-to-high (LTHs), BD-rewritables (REs), magnetic tapes, floppy disks, magneto-optical data storage devices, optical data storage devices, hard disks, solid state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While the present disclosure includes specific examples, it will be apparent after an understanding of the disclosure of this specification that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the present disclosure is defined not by the detailed description, but by the claims and their equivalents, and all variations within the scope of the claims and their equivalents are to be construed as being included in the present disclosure.

## Claims

1. A wireless power transmission apparatus (300) comprising:
a power transmission antenna array (310) comprising a plurality of patch antennas (111-126);
a plurality of phase shifters (1013-1029) each corresponding to the plurality of patch antennas;
a plurality of communication antennas (341-343); and
a processor (320),
wherein the processor (320) is configured to:
receive a communication signal from an electronic device (350) through the plurality of communication antennas (341-343),
identify at least one of a plurality of time points of reception of the communication signal each corresponding to the plurality of communication antennas (341-343) respectively, or a plurality of phases of the communication signal each corresponding to the plurality of communication antennas (341-343) respectively,
detect a direction in which the electronic device (350) is positioned based on at least one of the plurality of time points of reception or the plurality of phases,
control the plurality of phase shifters (1013-1029) such that a plurality of radio frequency, RF, waves from the plurality of patch antennas (111-126) constructively interfere with each other in the direction in which the electronic device (350) is positioned, wherein the each of the plurality of communication antennas (341-343) is positioned at a different portion of the wireless power transmission apparatus (300).

2. The wireless power transmission apparatus (300) of claim 1, wherein the processor (320) is further configured to identify whether to adjust a magnitude of the plurality of RF waves to a first magnitude depending on whether RX power-related information contained in a second communication signal received after the reception of the communication signal meets a preset condition.

3. The wireless power transmission apparatus (300) of claim 2, wherein the processor (320) is further configured to:
control the plurality of phase shifters (1013-1029) such that the plurality of RF waves of a second magnitude from the plurality of patch antennas (111-126) constructively interfere with one another when the RX power-related information is identified to fail to meet the preset condition; and
identify whether to adjust the magnitude of the plurality of RF waves of the second magnitude depending on whether RX power-related information contained in a third communication signal received from the electronic device (350) meets the preset condition.

4. The wireless power transmission apparatus (300) of claim 3, further comprising:
a power source (301) configured to provide power; and
a power amplifier configured to amplify the power,
wherein the processor (320) is further configured to change the magnitude of the plurality of RF waves from the first magnitude to the second magnitude by varying an amplification gain of the power amplifier.

5. The wireless power transmission apparatus (300) of claim 2, wherein the processor (320) is further configured to:
adjust the power provided to the plurality of patch antennas (111-126) until the RX power-related information meets the preset condition; and
maintain a magnitude of the power provided to the plurality of patch antennas (111-126) when the RX power-related information meets the preset condition.

6. The wireless power transmission apparatus (300) of claim 1, wherein the communication signal includes at least one of identification information about the electronic device (350) and rated power information about the electronic device (350), and
the processor (320) is further configured to identify whether to charge the electronic device (350) based on at least one of the identification information about the electronic device (350) and the rated power information about the electronic device (350).

7. The wireless power transmission apparatus (300) of claim 1, wherein the processor (320) is further configured to:
detect a move of the electronic device (350) while charging the electronic device (350) with the plurality of RF waves of the first magnitude; and
vary at least one of a magnitude of the plurality of RF waves and the identified direction corresponding to the move of the electronic device (350), and charge the electronic device (350).

8. A method for controlling a wireless power transmission apparatus (300), the method comprising:
receiving (510) a communication signal from an electronic device (350);
identifying at least one of a plurality of time points of reception of the communication signal each corresponding to a plurality of communication antennas (341-343) respectively, or a plurality of phases of the communication signal each corresponding to the plurality of communication antennas (341-343) respectively;
detecting (520) a direction in which the electronic device (350) is positioned based on at least one of the plurality of time points of reception or the plurality of phases;
controlling a plurality of phase shifters (1013-1029) such that a plurality of radio frequency, RF, waves from a plurality of patch antennas (111-126) of the electronic device (350) constructively interfere with each other in the direction in which the electronic device (350) is positioned, and
wherein the each of the plurality of communication antennas is positioned at a different portion of the wireless power transmission apparatus (300).

9. The method of claim 8, further comprising identifying whether to charge the electronic device (350) with the plurality of RF waves of a first magnitude depending on whether RX power-related information contained in a second communication signal received after the reception of the communication signal meets a preset condition.

10. The method of claim 9, further comprising:
controlling the plurality of patch antennas (111-126) such that the plurality of RF waves of a second magnitude constructively interfere with one another when the RX power-related information is identified to fail to meet the preset condition; and
identifying whether to charge the electronic device (350) with the plurality of RF waves of the second magnitude depending on whether RX power-related information contained in a third communication signal received from the electronic device (350) meets the preset condition.

## Patentansprüche

1. Drahtlose Leistungsübertragungsvorrichtung (300), welche Folgendes umfasst:
ein Leistungsübertragungs-Antennenarray (310) mit einer Vielzahl von Patch-Antennen (111-126);
eine Vielzahl von Phasenschiebern (1013-1029), die jeweils der Vielzahl von Patch-Antennen entsprechen;
eine Vielzahl von Kommunikationsantennen (341-343); und
einen Prozessor (320),
wobei der Prozessor (320) konfiguriert ist zum:
Empfangen eines Kommunikationssignals von einer elektronischen Vorrichtung (350) über die Vielzahl von Kommunikationsantennen (341-343),
Identifizieren einer Vielzahl von Zeitpunkten des Empfangs des Kommunikationssignals, die jeweils der Vielzahl von Kommunikationsantennen (341-343) entsprechen, und/oder einer Vielzahl von Phasen des Kommunikationssignals, die jeweils der Vielzahl von Kommunikationsantennen (341-343) entsprechen,
Erkennen einer Richtung, in die die elektronische Vorrichtung (350) positioniert ist, basierend auf der Vielzahl von Zeitpunkten des Empfangs und/oder der Vielzahl von Phasen,
Steuern der Vielzahl von Phasenschiebern (1013-1029), so dass eine Vielzahl von Funkfrequenz(RF)-Wellen aus der Vielzahl von Patch-Antennen (111-126) in die Richtung konstruktiv miteinander interferieren, in die die elektronische Vorrichtung (350) positioniert ist, wobei jede der Vielzahl von Kommunikationsantennen (341-343) an einem anderen Teil der drahtlosen Leistungsübertragungsvorrichtung (300) positioniert ist.

2. Drahtlose Leistungsübertragungsvorrichtung (300) nach Anspruch 1, wobei der Prozessor (320) ferner konfiguriert ist, um zu identifizieren, ob eine Größe der Vielzahl von RF-Wellen auf eine erste Größe eingestellt werden soll, abhängig davon, ob RX-leistungsbezogene Informationen, die in einem zweiten Kommunikationssignal enthalten sind, das nach dem Empfang des Kommunikationssignals empfangen wird, eine voreingestellte Bedingung erfüllen.

3. Drahtlose Leistungsübertragungsvorrichtung (300) nach Anspruch 2, wobei der Prozessor (320) ferner konfiguriert ist zum:
Steuern der Vielzahl von Phasenschiebern (1013-1029), so dass die Vielzahl von RF-Wellen einer zweiten Größe aus der Vielzahl von Patch-Antennen (111-126) konstruktiv miteinander interferieren, wenn identifiziert wird, dass die RX-leistungsbezogenen Informationen die voreingestellte Bedingung nicht erfüllen; und
Identifizieren, ob die Größe der Vielzahl von RF-Wellen der zweiten Größe angepasst werden soll, abhängig davon, ob RX-leistungsbezogene Informationen, die in einem dritten Kommunikationssignal enthalten sind, das von der elektronischen Vorrichtung (350) empfangen wird, die voreingestellte Bedingung erfüllen.

4. Drahtlose Leistungsübertragungsvorrichtung (300) nach Anspruch 3, welche ferner Folgendes umfasst:
eine Leistungsquelle (301), die konfiguriert ist, um Leistung bereitzustellen; und
einen Leistungsverstärker, der konfiguriert ist, um die Leistung zu verstärken,
wobei der Prozessor (320) ferner konfiguriert ist, um die Größe der Vielzahl von RF-Wellen von der ersten Größe auf die zweite Größe zu ändern, indem ein Verstärkungsfaktor des Leistungsverstärkers verändert wird.

5. Drahtlose Leistungsübertragungsvorrichtung (300) nach Anspruch 2, wobei der Prozessor (320) ferner konfiguriert ist zum:
Anpassen der Leistung, die der Vielzahl von Patch-Antennen (111-126) bereitgestellt wird, bis die RX-leistungsbezogenen Informationen die voreingestellte Bedingung erfüllen; und
Aufrechterhalten einer Größe der Leistung, die der Vielzahl von Patch-Antennen (111-126) bereitgestellt wird, wenn die RX-leistungsbezogenen Informationen die voreingestellte Bedingung erfüllen.

6. Drahtlose Leistungsübertragungsvorrichtung (300) nach Anspruch 1, wobei das Kommunikationssignal Identifikationsinformationen über die elektronische Vorrichtung (350) und/oder Nennleistungsinformationen über die elektronische Vorrichtung (350) enthält, und
der Prozessor (320) ferner konfiguriert ist, um zu identifizieren, ob die elektronische Vorrichtung (350) geladen werden soll, basierend auf den Identifikationsinformationen über die elektronische Vorrichtung (350) und/oder den Nennleistungsinformationen über die elektronische Vorrichtung (350).

7. Drahtlose Leistungsübertragungsvorrichtung (300) nach Anspruch 1, wobei der Prozessor (320) ferner konfiguriert ist zum:
Erkennen einer Bewegung der elektronischen Vorrichtung (350) während des Ladens der elektronischen Vorrichtung (350) mit der Vielzahl von RF-Wellen der ersten Größe; und
Variieren einer Größe der Vielzahl von RF-Wellen und/oder der identifizierten Richtung entsprechend der Bewegung der elektronischen Vorrichtung (350) und Laden der elektronischen Vorrichtung (350).

8. Verfahren zum Steuern einer drahtlosen Leistungsübertragungsvorrichtung (300), wobei das Verfahren Folgendes umfasst:
Empfangen (510) eines Kommunikationssignals von einer elektronischen Vorrichtung (350);
Identifizieren einer Vielzahl von Zeitpunkten des Empfangs des Kommunikationssignals, die jeweils einer Vielzahl von Kommunikationsantennen (341-343) entsprechen, und/oder einer Vielzahl von Phasen des Kommunikationssignals, die jeweils der Vielzahl von Kommunikationsantennen (341-343) entsprechen;
Erkennen (520) einer Richtung, in die die elektronische Vorrichtung (350) positioniert ist, basierend auf der Vielzahl von Zeitpunkten des Empfangs und/oder der Vielzahl von Phasen;
Steuern einer Vielzahl von Phasenschiebern (1013-1029), so dass eine Vielzahl von Funkfrequenz(RF)-Wellen aus einer Vielzahl von Patch-Antennen (111-126) der elektronischen Vorrichtung (350) in die Richtung konstruktiv miteinander interferieren, in die die elektronische Vorrichtung (350) positioniert ist, und
wobei jede der Vielzahl von Kommunikationsantennen an einem anderen Teil der drahtlosen Leistungsübertragungsvorrichtung (300) positioniert ist.

9. Verfahren nach Anspruch 8, welches ferner das Identifizieren umfasst, ob die elektronische Vorrichtung (350) mit der Vielzahl von RF-Wellen einer ersten Größe geladen werden soll, abhängig davon, ob RX-leistungsbezogene Informationen, die in einem zweiten Kommunikationssignal enthalten sind, das nach dem Empfang des Kommunikationssignals empfangen wird, eine voreingestellte Bedingung erfüllen.

10. Verfahren nach Anspruch 9, welches ferner Folgendes umfasst:
Steuern der Vielzahl von Patch-Antennen (111-126), so dass die Vielzahl von RF-Wellen einer zweiten Größe konstruktiv miteinander interferieren, wenn identifiziert wird, dass die RX-leistungsbezogenen Informationen die voreingestellte Bedingung nicht erfüllen; und
Identifizieren, ob die elektronische Vorrichtung (350) mit der Vielzahl von RF-Wellen der zweiten Größe geladen werden soll, abhängig davon, ob RX-leistungsbezogene Informationen, die in einem dritten Kommunikationssignal enthalten sind, das von der elektronischen Vorrichtung (350) empfangen wird, die voreingestellte Bedingung erfüllen.

## Revendications

1. Dispositif de transmission de puissance sans fil (300) comprenant :
un réseau d'antennes de transmission de puissance (310) comprenant une pluralité d'antennes à plaque (111-126) ;
une pluralité de déphaseurs (1013-1029) correspondant chacun à la pluralité d'antennes à plaque ;
une pluralité d'antennes de communication (341-343) ; et
un processeur (320),
où le processeur (320) est configuré pour :
recevoir un signal de communication à partir d'un dispositif électronique (350) par l'intermédiaire de la pluralité d'antennes de communication (341-343),
identifier au moins l'une parmi une pluralité de points temporels de réception du signal de communication correspondant chacun à la pluralité d'antennes de communication (341-343) respectivement, ou une pluralité de phases du signal de communication correspondant chacune à la pluralité d'antennes de communication (341-343) respectivement,
détecter une direction dans laquelle le dispositif électronique (350) est positionné sur la base d'au moins l'une parmi la pluralité de points temporels de réception ou la pluralité de phases,
commander la pluralité de déphaseurs (1013-1029) de telle sorte qu'une pluralité d'ondes de radiofréquence, RF, en provenance de la pluralité d'antennes à plaque (111-126) interfèrent de manière constructive les unes avec les autres dans la direction dans laquelle le dispositif électronique (350) est positionné, où chacune de la pluralité d'antennes de communication (341-343) est positionnée à une partie différente du dispositif de transmission de puissance sans fil (300).

2. Dispositif de transmission de puissance sans fil (300) selon la revendication 1, où le processeur (320) est configuré en outre pour identifier s'il faut ajuster une amplitude de la pluralité d'ondes de RF à une première amplitude suivant que les informations relatives à la puissance RX contenues dans un deuxième signal de communication reçu après la réception du signal de communication satisfont une condition prédéfinie ou non.

3. Dispositif de transmission de puissance sans fil (300) selon la revendication 2, où le processeur (320) est configuré en outre pour :
commander la pluralité de déphaseurs (1013-1029) de telle sorte que la pluralité d'ondes de RF d'une deuxième amplitude en provenance de la pluralité d'antennes à plaque (111-126) interfèrent de manière constructive les unes avec les autres lorsque les informations relatives à la puissance RX sont identifiées comme ne satisfaisant pas la condition prédéfinie ; et
identifier s'il faut ajuster l'amplitude de la pluralité d'ondes de RF de la deuxième amplitude suivant que les informations relatives à la puissance RX contenues dans un troisième signal de communication reçu à partir du dispositif électronique (350) satisfont la condition prédéfinie.

4. Dispositif de transmission de puissance sans fil (300) selon la revendication 3, comprenant en outre :
une source d'alimentation (301) configurée pour fournir de la puissance ; et
un amplificateur de puissance configuré pour amplifier la puissance,
où le processeur (320) est configuré en outre pour changer l'amplitude de la pluralité d'ondes de RF de la première amplitude à la deuxième amplitude en faisant varier un gain d'amplification de l'amplificateur de puissance.

5. Dispositif de transmission de puissance sans fil (300) selon la revendication 2, où le processeur (320) est configuré en outre pour :
ajuster la puissance fournie à la pluralité d'antennes à plaque (111-126) jusqu'à ce que les informations relatives à la puissance RX satisfassent la condition prédéfinie ; et
maintenir une amplitude de la puissance fournie à la pluralité d'antennes à plaque (111-126) lorsque les informations relatives à la puissance RX satisfont la condition prédéfinie.

6. Dispositif de transmission de puissance sans fil (300) selon la revendication 1, où le signal de communication comprend au moins l'une parmi des informations d'identification sur le dispositif électronique (350) et des informations de puissance nominale sur le dispositif électronique (350), et
le processeur (320) est configuré en outre pour identifier s'il faut charger le dispositif électronique (350) sur la base d'au moins l'une parmi les informations d'identification sur le dispositif électronique (350) et les informations de puissance nominale sur le dispositif électronique (350).

7. Dispositif de transmission de puissance sans fil (300) selon la revendication 1, où le processeur (320) est configuré en outre pour :
détecter un déplacent du dispositif électronique (350) tout en chargeant le dispositif électronique (350) avec la pluralité d'ondes de RF de la première amplitude ; et
faire varier au moins l'une parmi une amplitude de la pluralité d'ondes de RF et la direction identifiée correspondant au déplacent du dispositif électronique (350), et charger le dispositif électronique (350).

8. Procédé de commande d'un dispositif de transmission de puissance sans fil (300), le procédé comprenant :
recevoir (510) un signal de communication à partir d'un dispositif électronique (350) ;
identifier au moins l'une parmi une pluralité de points temporels de réception du signal de communication correspondant chacun à une pluralité d'antennes de communication (341-343) respectivement, ou une pluralité de phases du signal de communication correspondant chacune à la pluralité d'antennes de communication (341-343) respectivement ;
détecter (520) une direction dans laquelle le dispositif électronique (350) est positionné sur la base d'au moins l'une parmi la pluralité de points temporels de réception ou la pluralité de phases ;
commander une pluralité de déphaseurs (1013-1029) de telle sorte qu'une pluralité d'ondes de radiofréquence, RF, en provenance d'une pluralité d'antennes à plaque (111-126) du dispositif électronique (350) interfèrent de manière constructive les unes avec les autres dans la direction dans laquelle le dispositif électronique (350) est positionné, et
où chacune de la pluralité d'antennes de communication est positionnée à une partie différente du dispositif de transmission de puissance sans fil (300).

9. Procédé selon la revendication 8, comprenant en outre identifier s'il faut charger le dispositif électronique (350) avec la pluralité d'ondes de RF d'une première amplitude suivant que les informations relatives à la puissance RX contenues dans un deuxième signal de communication reçu après la réception du signal de communication satisfont une condition prédéfinie ou non.

10. Procédé selon la revendication 9, comprenant en outre :
commander la pluralité d'antennes à plaque (111-126) de telle sorte que la pluralité d'ondes de RF d'une deuxième amplitude interfèrent de manière constructive les unes avec les autres lorsque les informations relatives à la puissance RX sont identifiées comme ne satisfaisant pas la condition prédéfinie ; et
identifier s'il faut charger le dispositif électronique (350) avec la pluralité d'ondes de RF de la deuxième amplitude suivant que les informations relatives à la puissance RX contenues dans un troisième signal de communication reçu à partir du dispositif électronique (350) satisfont la condition prédéfinie.
